Europäisches Patentamt

(19) European Patent Office

Office européen des brevets

(11) EP 1 291 682 A1

## (12) EUROPEAN PATENT APPLICATION
published in accordance with Art. 158(3) EPC

(43) Date of publication:
12.03.2003 Bulletin 2003/11

(51) Int Cl.⁷: G02B 5/18, G02B 6/16, G02B 6/10

(21) Application number: 01930209.0

(22) Date of filing: 18.05.2001

(86) International application number:
PCT/JP01/04171

(87) International publication number:
WO 01/088573 (22.11.2001 Gazette 2001/47)

(84) Designated Contracting States:
AT BE CH CY DE DK ES FI FR GB GR IE IT LI LU MC NL PT SE TR

(30) Priority: 18.05.2000 JP 2000146790

(71) Applicant: Sumitomo Electric Industries, Ltd.
Osaka-shi, Osaka 541-0041 (JP)

(72) Inventors:
• OHMURA, Masaki
  Yokohama-shi, Kanagawa 244-8588 (JP)

• INOUE, Akira
  Yokohama-shi, Kanagawa 244-8588 (JP)
• HASHIMOTO, Ken
  Yokohama-shi, Kanagawa 244-8588 (JP)

(74) Representative: HOFFMANN - EITLE
Patent- und Rechtsanwälte
Arabellastrasse 4
81925 München (DE)

## (54) OPTICAL WAVEGUIDE TYPE DIFFRACTION GRATING AND METHOD FOR MANUFACTURING THE SAME

(57) The method of making a diffraction grating device in accordance with the present invention comprises the steps of preparing an optical waveguide having an optical waveguide region doped with an additive adapted to generate a refractive index change upon irradiation with refractive index change inducing light having a predetermined wavelength, and a phase grating having a predetermined projection and depression pattern; separating the optical waveguide and the phase grating from each other by a distance yielding a predetermined optical path difference between zero-order transmitted light and second-order diffracted light of the refractive index change inducing light such that a modulation intensity of interference light between the zero-order transmitted light and second-order diffracted light becomes 85% or less of that obtained when no optical path difference exists between the zero-order transmitted light and second-order diffracted light; and making the refractive index change inducing light incident on the phase grating, so as to form an interference fringe of first-order diffracted light in the optical waveguide region of the optical waveguide, thereby forming the optical waveguide region with a diffraction grating. The present invention provides a method of making a diffraction grating device which is easy to make while exhibiting a sufficiently small cutoff amount in the wavelength band of $0.9\lambda_B$ to $0.95\lambda_B$ (where $\lambda_B$ is a cutoff peak wavelength) originally meant to be transmitted.

**Fig.4**

## Description

### Technical Field

The present invention relates to a diffraction grating device in which a diffraction grating is formed in an optical waveguide region of an optical waveguide, and a method of making such a diffraction grating device.

### Background Art

A diffraction grating device is one in which a diffraction grating is formed in an optical waveguide region of an optical waveguide. Here, the optical waveguide is one in which a cladding region having a low refractive index is disposed about a core region having a high refractive index, and can cause an optical waveguide region including the core region to guide light. This optical waveguide includes not only an optical fiber but also a planar optical waveguide formed on a flat substrate. The optical waveguide is based on silica glass ($SiO_2$), whereas its core region is doped with an additive (e.g., $GeO_2$) adapted to raise the refractive index.

The silica glass doped with $GeO_2$ raises its refractive index when irradiated with refractive index change inducing light having a predetermined wavelength (e.g., KrF excimer laser light having a wavelength of 248 nm). Utilizing this fact, the diffraction grating device is made. Namely, an optical waveguide, based on silica glass, having an optical waveguide region doped with $GeO_2$ is prepared, and one surface of a phase grating made of a transparent flat plate in which projections and depressions having a predetermined period are formed is arranged so as to come into nearly close contact with the surface of the optical waveguide. Then, refractive index change inducing light is made incident on the phase grating, whereby interference fringes between +first-order diffracted light and -first-order diffracted light are formed in the optical waveguide region. In such a manner, a refractive index modulated area is generated in the optical waveguide region of optical waveguide according to the optical energy distribution of interference fringes, whereby the diffraction grating device is made.

Such a diffraction grating device is used as an optical filter, for example. Namely, the diffraction grating device blocks by a large cutoff amount a light component in a cutoff wavelength band including a Bragg wavelength (cutoff peak wavelength) $\lambda_B$ in the light having reached the refractive index modulated area after being guided through the optical waveguide region, while transmitting therethrough light components to be transmitted in wavelength bands other than the cutoff wavelength band. In optical communication systems, for example, there are cases where not only signal light in a 1550-nm wavelength band, but also monitor light having a wavelength of 1650 nm for monitoring optical transmission lines is guided. Here, a diffraction grating device adapted to transmit the signal light therethrough but block the monitor light is provided in front of a receiver, so that the signal light reaches the receiver whereas the monitor light does not reach the receiver.

### Disclosure of the Invention

The inventors studied the prior art mentioned above and, as a result, have found the following problem. Namely, in practice, there are cases where a diffraction grating device not only blocks light in the cutoff wavelength band including the cutoff peak wavelength $\lambda_B$ but also somewhat blocks light in the wavelength band of $0.9\lambda_B$ to $0.95\lambda_B$ originally meant to be transmitted therethrough. For example, while diffraction grating devices used in optical communication systems for guiding the signal light and monitor light can block the monitor light by a sufficient cutoff amount, there are cases where they also somewhat block the signal light originally meant to be transmitted. Since the signal light is attenuated by the diffraction grating device, the signal light reaching a receiver lowers its power, whereby reception errors may occur in extreme cases.

A diffraction grating device intended to overcome such a problem is disclosed in Japanese Patent Application Laid-Open No. HEI 11-326672. The diffraction grating device disclosed in this publication is one in which a refractive index modulated area is formed in an optical fiber of single-peak type having a core surrounded by a cladding and exhibiting a refractive index distribution form of $\alpha$-th power profile ($\alpha \leq 1.5$). Such a configuration intends to raise the cutoff amount in the cutoff wavelength band including the cutoff peak wavelength $\lambda_B$, while lowering the cutoff amount in the wavelength band of $0.9\lambda_B$ to $0.95\lambda_B$ originally meant to be transmitted therethrough.

However, the diffraction grating device disclosed in the above-mentioned publication is one in which a refractive index modulated area is formed not in an optical fiber having a usual refractive index of stepped index type, but in an optical fiber having a special $\alpha$-th power profile, which is not easy to make and yields a low mass-productivity. Also, the cutoff amount in the wavelength band of $0.9\lambda_B$ to $0.95\lambda_B$ originally meant to be transmitted is not sufficiently low.

In order to overcome the above-mentioned problem, it is an object of the present invention to provide a diffraction grating device exhibiting a sufficiently small cutoff amount in the wavelength band of $0.9\lambda_B$ to $0.95\lambda_B$ (where

$\lambda_B$ is a cutoff peak wavelength) originally meant to be transmitted, which is easy to make, and a method of making the same.

The method of making a diffraction grating device in accordance with the present invention comprises the steps of preparing an optical waveguide having an optical waveguide region doped with an additive adapted to generate a refractive index change upon irradiation with refractive index change inducing light having a predetermined wavelength, and a phase grating having a predetermined projection and depression pattern; separating the optical waveguide and the phase grating from each other by a distance yielding a predetermined optical path difference between zero-order transmitted light and second-order diffracted light of the refractive index change inducing light such that a modulation intensity of interference light between the zero-order transmitted light and second-order diffracted light becomes 85% or less of that obtained when no optical path difference exists between the zero-order transmitted light and second-order diffracted light; and making the refractive index change inducing light incident on the phase grating, so as to form an interference fringe of first-order diffracted light in the optical waveguide region of the optical waveguide, thereby forming the optical waveguide region with a diffraction grating.

When refractive index change inducing light having a predetermined wavelength is made incident on a phase grating, not only first-order diffracted light but also zero-order transmitted light and higher-order (second-order or higher) diffracted light are generated from the phase grating. Conventionally, light in the wavelength band of $0.9\lambda_B$ to $0.95\lambda_B$ originally meant to be transmitted has been blocked due to components of the refractive index modulation based on interference fringes between the zero-order transmitted light and higher-order diffracted light, interference fringes between the zero-order transmitted light and second-order diffracted light in particular. In the present invention, however, the optical waveguide and the phase grating are separated from each other as mentioned above, so that components of the refractive index modulation based on interference fringes between the zero-order transmitted light and second-order diffracted light are weak, whereby the cutoff amount in the wavelength band of $0.9\lambda_B$ to $0.95\lambda_B$ becomes smaller.

The diffraction grating device in accordance with the present invention is made by the above-mentioned method of making a diffraction grating device in accordance with the present invention. In particular, it exhibits a cutoff amount of at least 20 dB in a cutoff wavelength band having a width of at least 15 nm including a cutoff peak wavelength $\lambda_B$, and a cutoff amount of 1 dB or less in the wavelength band of $0.9\lambda_B$ to $0.95\lambda_B$. Alternatively, it exhibits a cutoff amount of at least 20 dB in a cutoff wavelength band having a width of at least 0.2 nm including the cutoff peak wave length $\lambda_B$, and a cutoff amount of 0.2 dB or less in the wavelength band of $0.9\lambda_B$ to $0.95\lambda_B$. Such a diffraction grating device is favorably used, for example, in an optical communication system in which the cutoff peak wavelength $\lambda_B$ is at a monitor light wavelength of 1650 nm whereas the signal light wavelength is in the 1550-nm wavelength band.

The present invention will become more fully understood from the detailed description given hereinbelow and the accompanying drawings. They are given by way of illustration only, and thus should not be considered limitative of the present invention.

**Brief Description of the Drawings**

Fig. 1 is a view for explaining the optical path difference between zero-order transmitted light and second-order diffracted light;

Fig. 2 is a graph showing the relationship between the optical distance from a phase grating surface to the optical axis center of an optical waveguide and the optical path difference between zero-order transmitted light and second-order diffracted light;

Fig. 3 is a graph showing the relationship between the optical path difference 'and normalized modulation intensity of interference light;

Fig. 4 is an explanatory view of the method of making a diffraction grating device in accordance with an embodiment of the present invention;

Fig. 5 is a view showing the positional relationship between zero-order transmitted light and first-order diffracted light for determining the upper limit $D_{max}$ of optical distance D;

Fig. 6 is a view showing the loss spectrum of a diffraction grating device made such that the distance between the optical fiber surface and the phase grating surface was 100 $\mu$m;

Fig. 7 is a view showing the loss spectrum of a diffraction grating device made such that the distance between the optical fiber surface and the phase grating surface was 300 $\mu$m;

Fig. 8 is a graph showing the relationship between the distance between the optical fiber surface and phase grating surface and the loss peak value at a wavelength of 1520 nm;

Fig. 9 is a graph showing the relationship between the distance between the optical fiber surface and phase grating surface and the irradiation time of refractive index change inducing light required for the cutoff amount at the cutoff peak wavelength $\lambda_B$ to become at least 30 dB;

Fig. 10 is a view showing the transmission spectrum of a diffraction grating device having a wide cutoff wavelength band made such that the distance between the optical fiber surface and phase grating surface was 100 µm;

Fig. 11 is a view showing the transmission spectrum of a diffraction grating device having a wide cutoff wavelength band made such that the distance between the optical fiber surface and phase grating surface was 1000 µm;

Fig. 12 is a view showing the transmission spectrum of a diffraction grating device having a narrow cutoff wavelength band made such that the distance between the optical fiber surface and phase grating surface was 100 µm;

Fig. 13 is a view showing the transmission spectrum of a diffraction grating device having a narrow cutoff wavelength band made such that the distance between the optical fiber surface and phase grating surface was 600 µm;

Fig. 14 is a graph showing loss spectrum around a transmission wavelength band of $0.9\lambda_B$ to $0.95\lambda_B$ in cases where the distance between the optical fiber surface and phase grating surface is 100 µm (indicated by L1), 300 µm (indicated by L2), and 600 µm (indicated by L3), respectively; and

Fig. 15 is a graph showing the relationship between the radiation loss and the distance from the phase grating to the optical fiber surface around 1.52-µm wavelength band when the transmission wavelength band is $0.9\lambda_B$ to $0.95\lambda_B$.

## Best Modes for Carrying Out the Invention

In the following, embodiments of the present invention will be explained in detail with reference to the accompanying drawings. In the explanation of the drawings, constituents identical to each other will be referred to with numerals identical to each other without repeating their overlapping descriptions. Though an optical fiber will mainly be explained as an optical waveguide in the following, the same holds for planar optical waveguides formed on a flat substrate as well.

First, how the present invention has been conceived will be explained. The inventors investigated and analyzed reasons why there are cases where diffraction grating devices somewhat block light in the wavelength band of $0.9\lambda_B$ to $0.95\lambda_B$ (where $\lambda_B$ is a cutoff peak wavelength) originally meant to be transmitted therethrough, and conducted studies for reducing the cutoff amount in the wavelength band of $0.9\lambda_B$ to $0.95\lambda_B$. As a result, the inventors have found that light in the wavelength band of $0.9\lambda_B$ to $0.95\lambda_B$ is presumed to be blocked due to components of the refractive index modulation based on interference fringes between the zero-order transmitted light and higher-order (second-order or higher) diffracted light from the phase grating, interference fringes between the zero-order transmitted light and second-order diffracted light in particular, in the conventional diffraction grating devices.

It has also been found that the cutoff amount in the wavelength band of $0.9\lambda_B$ to $0.95\lambda_B$ varies depending on the distance between the optical waveguide and phase grating, whereby the optical distance between the phase grating surface and the optical axis center of optical waveguide is required to be at least 250 µm in order to attain a cutoff amount of 1 dB or less when forming a diffraction grating in the optical waveguide region by using KrF excimer laser having a center wavelength of 248 nm and a line width of 500 pm as a light source for light inducing a refractive index modulation and employing a phase grating having a mask period of 1.138 µm (with a cutoff peak wavelength $\lambda_B$ = 1.65 µm) as the phase grating.

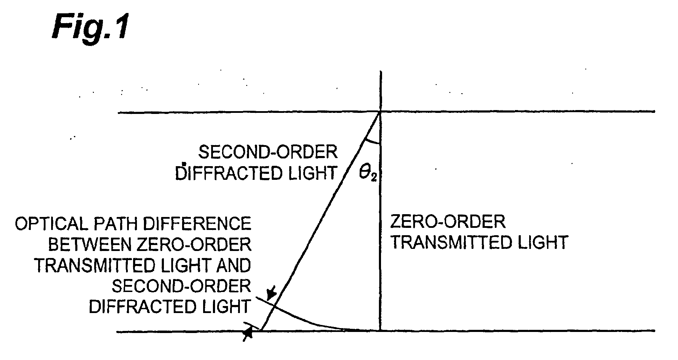

Therefore, the inventors studied the relationship between the optical distance from the phase grating surface to the optical axis center of optical waveguide and the optical path difference between the zero-order transmitted light and second-order diffracted light affecting the cutoff amount in the wavelength band of $0.9\lambda_B$ to $0.95\lambda_B$. The optical path difference between the zero-order transmitted light and second-order diffracted light depends on the angle of diffraction of the zero-order transmitted light and second-order diffracted light, and varies according to the period of the phase grating employed. Assuming that the diffracted light beams have the positional relationship shown in Fig. 1, the angle of diffraction $\theta_i$ of each diffracted light beam is determined from $\sin \theta_i = i \cdot (\lambda/a)$, and is represented as in Table 1. Here, $\lambda$ and $a$ indicate the wavelength of incident light and the mask period, respectively.

TABLE 1

| Order of diffraction i | 0 | 1 | 2 |
|---|---|---|---|
| Angle of diffraction $\theta_i$ (deg) | 0.0 | 12.6 | 25.8 |

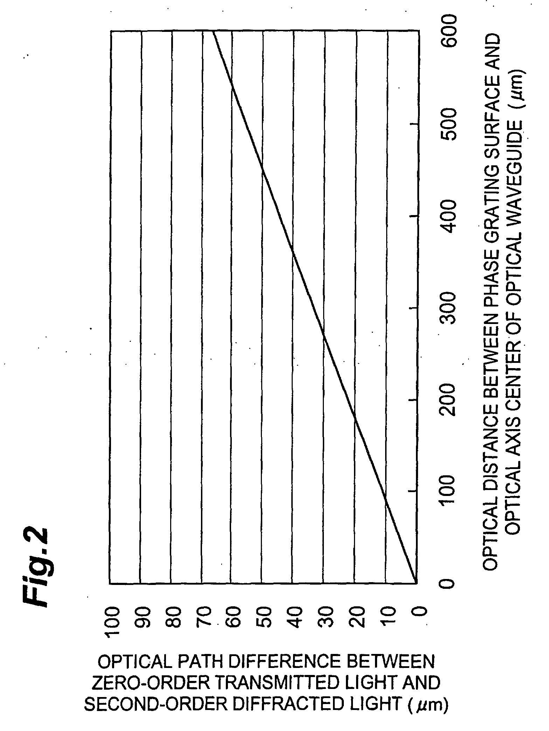

Using this angle of diffraction, the relationship between the optical path difference between the zero-order transmitted light and second-order diffracted light and the optical distance from the phase grating surface to the optical axis center of optical waveguide is determined. As shown in Fig. 2, it is seen that the optical path difference between the zero-order transmitted light and second-order diffracted light is required to be at least 30 µm in order for the optical distance between the phase grating surface and the optical axis center of optical waveguide to become at least 250 µm.

Here, the modulation intensity I (x) of interference light of laser light is expressed by:

$$I(x) = \int P(k)\cos(2\pi kx)\,dk \tag{1}$$

where x and P(k) indicate the optical path difference and the spectrum of laser light, respectively. Here, the spectrum P(k) is expressed by:

$$P(k) = \exp\left\{-\frac{(k_{cen} - k)^2}{\Delta k^2}\right\} \tag{2}$$

where k is the wave number of light, $k_{cen}$ is the optical center wavelength, and $\Delta k$ is the optical frequency width. The wave number of light k is expressed as $1/\lambda$ by using the wavelength $\lambda$ of laser light.

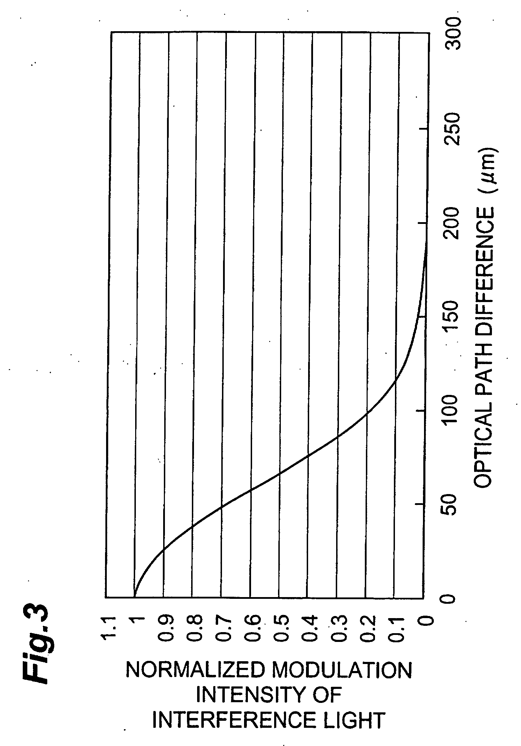

When the above-mentioned KrF excimer laser having a center wavelength of 248 nm and a line width of 500 pm is used, the modulation intensity of interference light of laser light is represented by the curve shown in Fig. 3 from expressions (1) and (2). In Fig. 3, the abscissa indicates the optical path difference x, whereas the ordinate indicates the normalized modulation intensity of interference light. From Fig. 3, it has been seen that, when the optical path difference is at least 30 μm, the modulation intensity of interference light of laser light became 85% or less of that obtained when the optical path difference was 0.

From the foregoing knowledge, the inventors have found that a diffraction grating whose cutoff amount is sufficiently small in the wavelength band of $0.9\lambda_B$ to $0.95\lambda_B$ can easily be formed if refractive index change inducing light is made incident on a phase grating while an optical waveguide and the phase grating are separated from each other by a distance yielding a predetermined optical path difference between zero-order transmitted light and second-order diffracted light of the refractive index change inducing light such that the modulation intensity of interference light between the zero-order transmitted light and second-order diffracted light becomes 85% or less of that obtained when the optical path difference between the zero-order transmitted light and second-order diffracted light is 0, thus attaining the present invention.

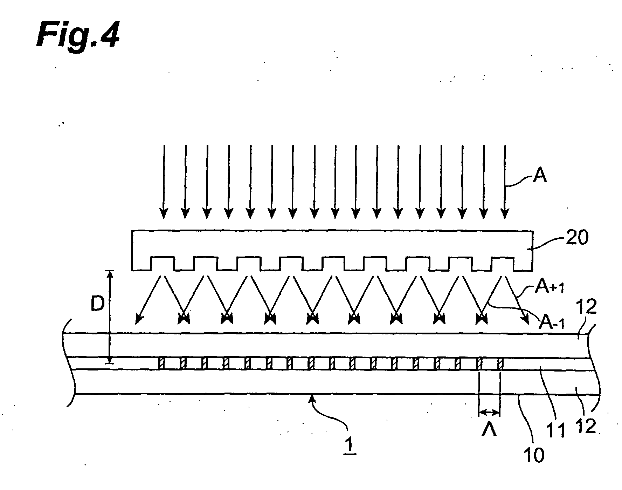

An embodiment of the method of making a diffraction grating device in accordance with the present invention will nowbe explained. Fig. 4 is an explanatory view of the method of making a diffraction grating device in accordance with this embodiment. This drawing shows respective cross sections of an optical fiber 10 and a phase grating 20.

The optical fiber 10 is one in which a cladding region 12 having a low refractive index is disposed about a core region 11 having a high refractive index, and can cause an optical waveguide region including the core region 11 to guide light. The optical fiber 10 is based on silica glass ($SiO_2$), whereas the core region 11 is doped with $GeO_2$. $GeO_2$ is not only an additive adapted to raise the refractive index of the core region 11 when simply added thereto, but also an additive adapted to further raise the refractive index of the core region 11 when irradiated with refractive index change inducing light having a predetermined wavelength. The refractive index change inducing light is KrF excimer laser light (having a wavelength of 248 nm) or the second harmonic (having a wavelength of 244 nm) of argon ion laser, for example.

The phase grating 20 is a transmission diffraction grating of phase modulation type made of a flat silica glass plate one surface of which is formed with projections and depressions having a predetermined period. The period of projections and depressions in the phase grating 20 is designed so as to become twice that of the refractive index modulation to be formed in the core region 11 of optical fiber 10. The phase grating 20 is disposed parallel to the optical fiber 10 such that its surface formed with projections and depressions faces the optical fiber 10. Here, the optical axis center of core region 11 of optical fiber 10 and the surface of phase grating 20 formed with projections and depressions are separated from each other by an optical distance D. In this embodiment, the optical distance D is set to a distance yielding a predetermined optical path difference between zero-order transmitted light and second-order diffracted light of the refractive index change inducing light such that the modulation intensity of interference light between the zero-order transmitted light and second-order diffracted light becomes 85% or less of that obtained when the optical path difference between the zero-order transmitted light and second-order diffracted light is 0.

Here, the optical distance D becomes at least 0.25 mm when a diffraction grating is formed in the core region 11 while using KrF excimer laser having a center wavelength of 248 nm and a line width of 500 pm as a light source for light inducing the above-mentioned refractive index modulation, and a phase grating having a mask period of 1.138 μm (with a cutoff peak wavelength $\lambda_B$ = 1.65 μm) as the phase grating 20.

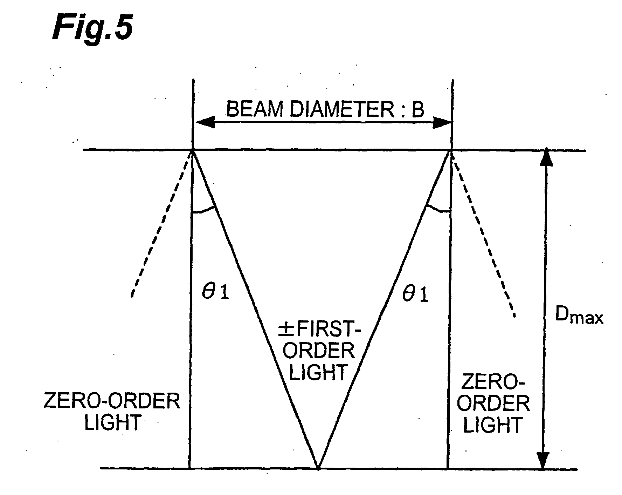

Also, the upper limit of optical distance D is a distance by which the ±first-order diffracted light forming the Bragg wavelength does not reach the core region 11 of optical fiber 10. This distance $D_{max}$ is determined from $D_{max} = B/(2 \cdot \tan\theta_1)$ according to the positional relationship shown in Fig. 5. When the beam diameter B of laser light is 10 mm, the upper limit $D_{max}$ of optical distance D is 22.4 mm. In the actual making of a diffraction grating, however, the beam diameter is restricted, and the optical distance becomes shorter than the upper limit in order to attain a desirable grating length when the time for forming gratings is taken into consideration. In view of these various circumstances, it is preferred that the optical distance D be within the range of:

$$0.25\,mm \leq D \leq 1.0\,mm \leq D_{max} \qquad (1)$$

when using KrF excimer laser having a line width of 500 pm.

While the phase grating 20 and the optical fiber 10 are separated from each other by thus defined optical distance D, the refractive index change inducing light is made incident on the phase grating 20, so as to form interference fringes of refractive index change inducing light in the core region 11 of optical fiber 10. Namely, refractive index change inducing light A is made incident on the phase grating 20 at right angles, so as to generate +first-order diffracted light $A_{+1}$ and -first-order diffracted light $A_{-1}$ from the phase grating 20, whereby interference fringes of the +first-order diffracted light $A_{+1}$ and -first-order diffracted light $A_{-1}$ are formed in the core region 11. In such a manner, a refractive index modulation corresponding to the optical energy distribution of interference fringes is generated in the core region 11, so as to make a diffraction grating device 1 having a cutoff peak wavelength $\lambda_B$. The cutoff peak wavelength $\lambda_B$ is represented by the relational expression of:

$$\lambda_B = 2N \cdot \Lambda \qquad (2)$$

from the period $\Lambda$ of the refractive index modulation formed in the core region 11 and the effective refractive index N of the optical fiber 10 in the refractive index modulated area.

When the refractive index change inducing light is made incident on the phase grating 20, not only the +first-order diffracted light $A_{+1}$ and -first-order diffracted light $A_{-1}$, but also zero-order transmitted light and higher-order (second-order or higher) diffracted light are generated from the phase grating 20. Then, in the conventional cases, light in the wavelength band of $0.9\lambda_B$ to $0.95\lambda_B$ is blocked due to components of the refractive index modulation based on interference fringes between the zero-order transmitted light and higher-order diffracted light, interference fringes between the zero-order transmitted light and second-order diffracted light in particular.

In this embodiment, however, the optical distance D is set to a value falling within the above-mentioned range, the numeric range of the above-mentioned expression (1) in particular, so that components of the refractive index modulation based on interference fringes between the zero-order transmitted light and second-order diffracted light are weak, whereby the cutoff amount in the wavelength band of $0.9\lambda_B$ to $0.95\lambda_B$ becomes smaller.

When the optical distance D is less than the lower limit of numeric range of the above-mentioned expression (1), components of the refractive index modulation based on interference fringes between the zero-order transmitted light and second-order diffracted light become so large that the cutoff amount exceeds 1 dB in the wavelength band of $0.9\lambda_B$ to $0.95\lambda_B$ originally meant to be transmitted. When the optical distance D exceeds the upper limit of the numeric range of the above-mentioned expression (1), on the other hand, desirable components of the refractive index modulation based on the +first-order diffracted light and - first-order diffracted light become so small that the cutoff amount in the cutoff wavelength band becomes smaller, or the irradiation time of refractive index change inducing light required for yielding a desirable cutoff amount in the cutoff wavelength band becomes longer. In particular, when the optical distance D exceeds 22.4 mm, ±first-order diffracted light does not reach the core region 11, thus failing to form the diffraction grating 1.

In the following, relationships between the distance between the optical fiber surface and phase grating surface, the cutoff amount at a cutoff peak wavelength $\lambda_B$, the loss peak value at a wavelength within the transmission wavelength band of $0.9\lambda_B$ to $0.95\lambda_B$, the irradiation time of refractive index change inducing light required for the cutoff amount at the cutoff peak wavelength $\lambda_B$ to become at least 30 dB, and the like will be explained. Here, KrF excimer laser light having a wavelength of 248 nm and a line width of 500 pm was used as the refractive index change inducing light.

First, a diffraction grating device having a wide cutoff band with a cutoff bandwidth of 20 nm including a cutoff peak wavelength $\lambda_B$ was prepared. Here, as the phase grating 20, one having a mask period of 1.138 μm was used. The cutoff peak wavelength $\lambda_B$ was set to 1650 nm.

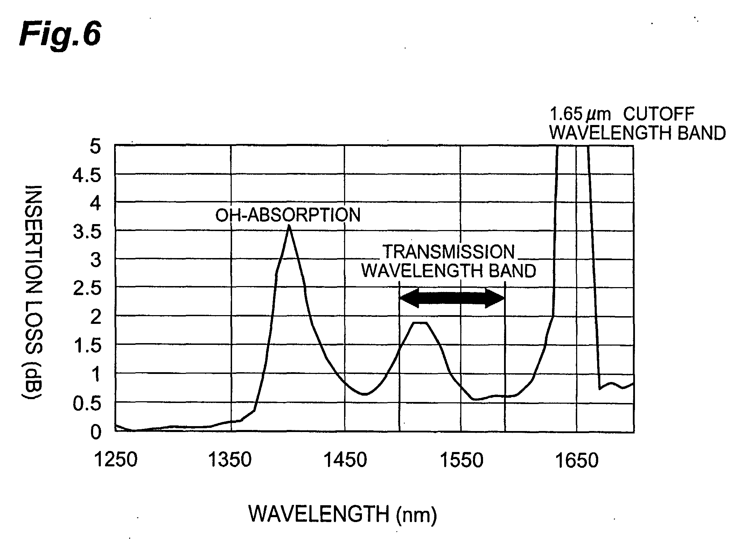

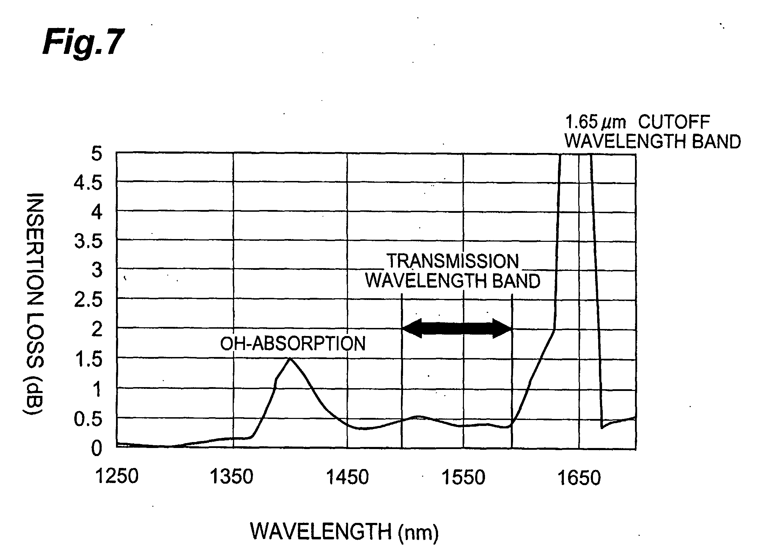

Fig. 6 is a view showing the loss spectrum of a diffraction grating device made such that the distance between the optical fiber surface and the phase grating surface was 100 μm. Fig. 7 is a view showing the loss spectrum of a diffraction grating device made such that the distance between the optical fiber surface and the phase grating surface was 300 μm. When the distance between the optical fiber surface and the phase grating surface was 100 μm, as can be seen from Fig. 6, loss exceeded 1 dB in the wavelength band of $0.9\lambda_B$ to $0.95\lambda_B$ originally meant to be transmitted, so that the loss peak at a wavelength of 1520 nm reached about 1.8 dB, although the cutoff amount was sufficiently large in the cutoff wavelength band including the cutoff peak wavelength $\lambda_B$. When the distance between the optical fiber surface and the phase grating surface was 300 µm, by contrast, the cutoff amount was sufficiently large in the cutoff wavelength band including the cutoff peak wavelength $\lambda_B$, and loss was less than 1 dB in the wavelength band of $0.9\lambda_B$ to $0.95\lambda_B$ originally meant to be transmitted, whereby the loss peak at a wavelength of 1520 nm was kept at about 0.6 dB as can be seen from Fig. 7.

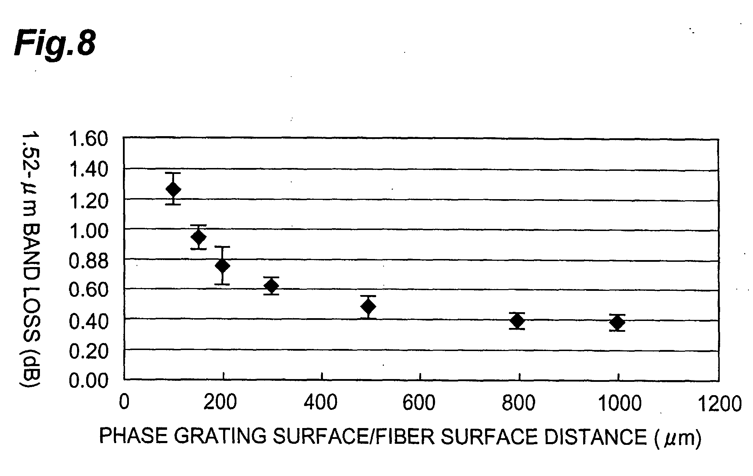

Fig. 8 is a graph showing the relationship between the distance between the optical fiber surface and phase grating surface and the loss peak value at a wavelength of 1520 nm. The distance between the optical fiber surface and phase grating surface was set so as to fall within the range of 100 µm to 1000 µm. As can be seen from this graph, the loss peak value became lower at a wavelength of 1520 nm within the transmission wavelength band of $0.9\lambda_B$ to $0.95\lambda_B$ as the distance is longer in this distance range. The loss peak value at a wavelength of 1520 nm within the transmission wavelength band was 1 dB or less when the distance between the optical fiber surface and phase grating surface was 150 µm or greater.

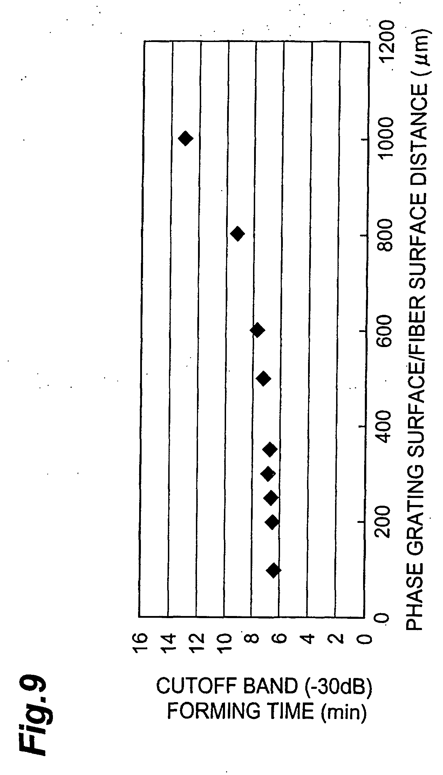

Fig. 9 is a graph showing the relationship between the distance between the optical fiber surface and phase grating surface and the irradiation time of refractive index change inducing light required for the cutoff amount at the cutoff peak wavelength $\lambda_B$ to become at least 30 dB. The distance between the optical fiber surface and phase grating surface was set so as to fall within the range of 100 µm to 1000 µm. As can be seen from this graph, a cutoff amount of 30 dB or greater was obtained at the cutoff peak wavelength $\lambda_B$ within this distance range. Also, in this distance range, the irradiation time of refractive index change inducing light required for the cutoff amount at the cutoff peak wavelength $\lambda_B$ to become at least 30 dB became longer as the distance was longer.

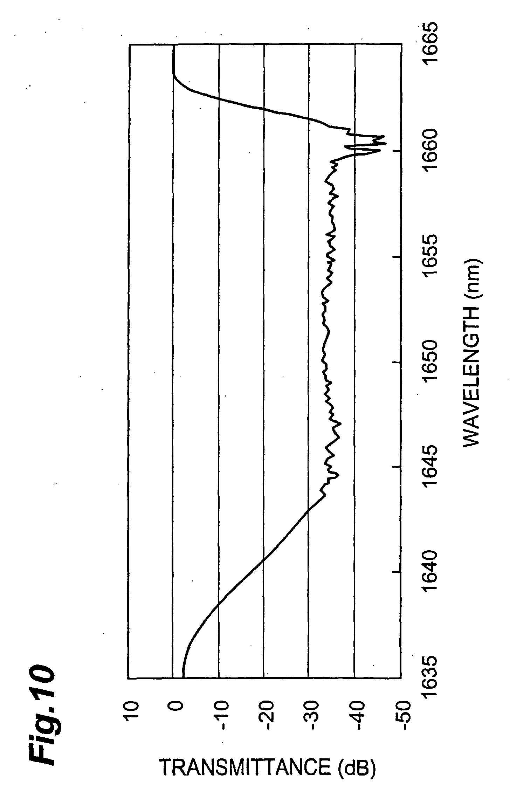

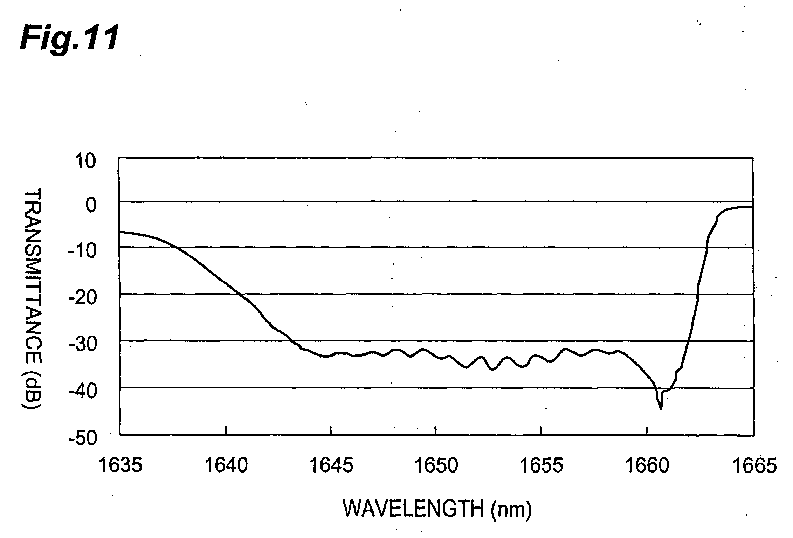

Fig. 10 is a view showing the transmission spectrum of a diffraction grating device made such that the distance between the optical fiber surface and phase grating surface was 100 µm. Fig. 11 is a view showing the transmission spectrum of a diffraction grating device made such that the distance between the optical fiber surface and phase grating surface was 1000 µm. As can be seen from these views, the cutoff amount was at least 20 dB in a wavelength band (about 1641 nm to about 1662 nm) including the cutoff peak wavelength $\lambda_B$ in either of the cases where the distance between the optical fiber surface and phase grating surface was 100 µm and 1000 µm. Also, the cutoff amount was at least 30 dB in a wavelength band (about 1643 nm to about 1662 nm) including the cutoff peak wavelength $\lambda_B$.

Next, a diffraction grating device 1 having a narrow cutoff wavelength band with a cutoff wavelength bandwidth of 0.4 nm including the cutoff peak wavelength was prepared. Here, as the phase grating 20, one having a mask period of 1.138 µm was used.

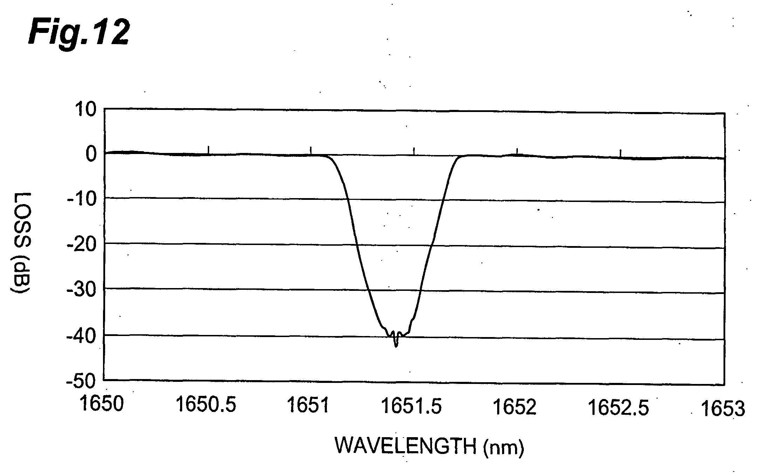

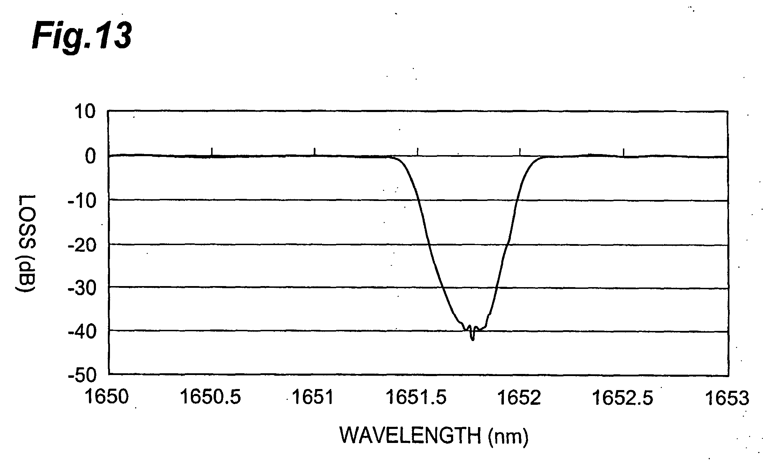

Fig. 12 is a view showing the transmission spectrum of a diffraction grating device made such that the distance between the optical fiber surface and phase grating surface was 100 µm. The cutoff peak wavelength $\lambda_B$ at that time was 1651.4 nm. Fig. 13 is a view showing the transmission spectrum of a diffraction grating device made such that the distance between the optical fiber surface and phase grating surface was 600 µm. The cutoff peak wavelength $\lambda_B$ at that time was 1651.7 nm.

As can be seen from Fig. 12, the cutoff amount was at least 20 dB in a wavelength band (about 1651.2 nm to about 1651.6 nm) including the cutoff peak wavelength $\lambda_B$ when the distance between the optical fiber surface and phase grating surface was 100 µm. Also, the cutoff amount was at least 30 dB in a wavelength band (about 1651.3 nm to about 1651.5 nm) including the cutoff peak wavelength $\lambda_B$. As can be seen from Fig. 13, the cutoff amount was at least 20 dB in a wavelength band (about 1651.5 nm to about 1651.9 nm) including the cutoff peak wavelength $\lambda_B$ when the distance between the optical fiber surface and phase grating surface was 600 µm. Also, the cutoff amount was at least 30 dB in a wavelength band (about 1651.6 nm to about 1651.8 nm) including the cutoff peak wavelength $\lambda_B$.

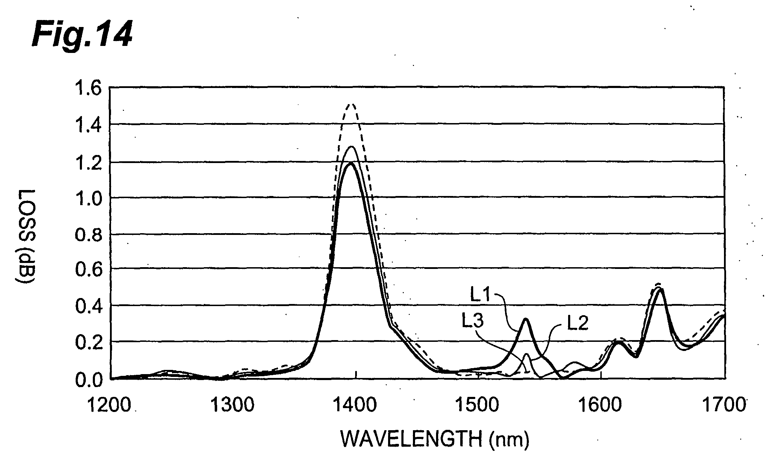

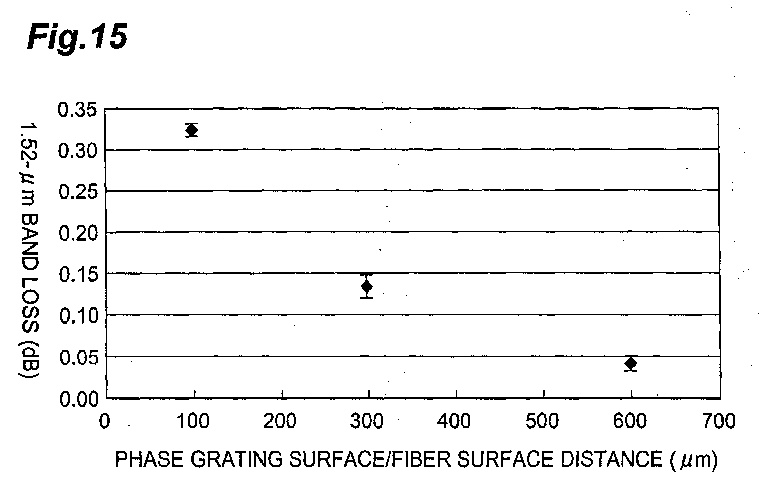

Fig. 14 is a graph showing loss spectrum (cutoff amounts) around the transmission wavelength band of $0.9\lambda_B$ to $0.95\lambda_B$ in cases where the distance between the optical fiber surface and phase grating surface is 100 µm (indicated by L1), 300 µm (indicated by L2), and 600 µm (indicated by L3), respectively. Fig. 15 is a graph showing the relationship between the radiation loss and the distance from the phase grating to the optical fiber surface in the vicinity of 1.52-µm wavelength band when the transmission wavelength band is $0.9\lambda_B$ to $0.95\lambda_B$.

As shown in Figs. 14 and 15, it is seen that, while the radiation loss in the vicinity of the 1.52-µm wavelength band is at least 0.3 dB when the distance between the optical fiber surface and phase grating surface is 100 µm, the radiation loss in the vicinity of the 1.52-µm wavelength band is suppressed so as to become less than 0.2 dB when the distance between the optical fiber surface and phase grating surface is elongated to 300 µm and 600 µm.

While the distance d between the optical fiber surface and phase grating surface is taken into consideration in the foregoing, the optical distance D between the optical axis center of optical fiber and the phase grating surface is determined by the relational expression of:

$$D = d + n \cdot r \qquad\qquad (3)$$

where r is the radius of optical fiber, and n is the refractive index of optical fiber at the wavelength of refractive index change inducing light. In general, the radius r of optical fiber is 62.5 $\mu$m, whereas the refractive index n of optical fiber at a wavelength of 248 nm is 1.51.

In the method of making a diffraction grating device in accordance with this embodiment, as in the foregoing, the optical distance between the optical axis center of core region in the optical fiber and the phase grating surface is adjusted appropriately, so as to fall within the numerical range of the above-mentioned expression (1) in particular, whereby thus made diffraction grating device can sufficiently lower the cutoff amount in the wavelength band of $0.9\lambda_B$ to $0.95\lambda_B$ originally meant to be transmitted, while fully securing the cutoff amount in the cutoff wavelength band including the cutoff peak wavelength $\lambda_B$. Also, since it will be sufficient if a refractive index modulation is formed by use of an optical fiber having a normal refractive index profile of stepped index type, the making is easy, and the mass-productivity is excellent.

The method of making a diffraction grating device in accordance with this embodiment can make a diffraction grating device exhibiting a cutoff amount of at least 20 dB in a cutoff wavelength band having a width of at least 15 nm including the cutoff peak wavelength $\lambda_B$, and a cutoff amount of 1 dB or less in the wavelength band of cutoff wavelength band $0.9\lambda_B$ to $0.95\lambda_B$. Alternatively, it can make a diffraction grating device exhibiting a cutoff amount of at least 20 dB in a cutoff wavelength band having a width of at least 0.2 nm including the cutoff peak wavelength $\lambda_B$, and a cutoff amount of 0.2 dB or less in the wavelength band of cutoff wavelength band $0.9\lambda_B$ to $0.95\lambda_B$. Therefore, in an optical communication system guiding not only signal light in the 1550-nm wavelength band but also monitor light at a wavelength of 1650 nm for monitoring an optical transmission line, for example, it will be favorable if the diffraction grating device in accordance with this embodiment designed so as to have a cutoff peak wavelength at the monitor light wavelength of 1650 nm is disposed in front of a receiver. In such a manner, the diffraction grating device can block the monitor light by a cutoff amount of 20 dB or greater, so as to keep it from reaching the receiver. On the other hand, the diffraction grating device allows the signal light to reach the receiver with a cutoff amount of 1 dB or less, so that the signal light reaching the receiver has a sufficient power, thereby lowering the risk of generating reception errors.

**Industrial Applicability**

The method of making a diffraction grating device in accordance with the present invention can make a diffraction grating device having a sufficiently small cutoff amount in the wavelength band of $0.9\lambda_B$ to $0.95\lambda_B$ originally meant to be transmitted, while fully securing a cutoff amount in a cutoff wavelength band including the cutoff peak wavelength $\lambda_B$. Also, since it will be sufficient if a refractive index modulation is formed by use of an optical fiber having a normal refractive index profile of stepped index type, the making is easy, and the mass-productivity can be improved.

From the foregoing explanations of the invention, it will be obvious that the same may be varied in many ways. Such variations are not to be regarded as a departure from the spirit and scope of the invention, and all such modifications as would be obvious to one skilled in the art are intended to be included within the scope of the following claims.

**Claims**

1. Amethod of making a diffraction grating device comprising the steps of:

   preparing an optical waveguide having an optical waveguide region doped with an additive adapted to generate a refractive index change upon irradiation with refractive index change inducing light having a predetermined wavelength, and a phase grating having a predetermined projection and depression pattern;
   separating said optical waveguide and said phase grating from each other by a distance yielding a predetermined optical path difference between zero-order transmitted light and second-order diffracted light of said refractive index change inducing light such that amodulation intensity of interference light between said zero-order transmitted light and second-order diffracted light becomes 85% or less of that obtained when no optical path difference exists between said zero-order transmitted light and second-order diffracted light; and
   making said refractive index change inducing light incident on said phase grating, so as to form an interference fringe of first-order diffracted light in said optical waveguide region of said optical waveguide, thereby forming said optical waveguide region with a diffraction grating.

2. Adiffraction grating device made by the method of making a diffraction grating device according to claim 1.

3. Adiffraction grating device according to claim 2, exhibiting a cutoff amount of at least 20 dB in a cutoff wavelength band having a width of at least 15 nm including a cutoff peak wavelength $\lambda_B$, and a cutoff amount of 1 dB or less in a wavelength band of $0.9\lambda_B$ to $0.95\lambda_B$.

4. Adiffraction grating device according to claim 2, exhibiting a cutoff amount of at least 20 dB in a cutoff wavelength band having a width of at least 0.2 nm including a cutoff peak wavelength $\lambda_B$, and a cutoff amount of 0.2 dB or less in a wavelength band of $0.9\lambda_B$ to $0.95\lambda_B$.

## Fig.1

# Fig.2

OPTICAL DISTANCE BETWEEN PHASE GRATING SURFACE AND OPTICAL AXIS CENTER OF OPTICAL WAVEGUIDE ($\mu$m)

OPTICAL PATH DIFFERENCE BETWEEN ZERO-ORDER TRANSMITTED LIGHT AND SECOND-ORDER DIFFRACTED LIGHT ($\mu$m)

## Fig.3

NORMALIZED MODULATION INTENSITY OF INTERFERENCE LIGHT

OPTICAL PATH DIFFERENCE ($\mu$m)

EP 1 291 682 A1

## Fig.4

## *Fig.5*

Fig.6

EP 1 291 682 A1

## Fig.7

EP 1 291 682 A1

# Fig.8

PHASE GRATING SURFACE/FIBER SURFACE DISTANCE ($\mu$m)

1.52-$\mu$m BAND LOSS (dB)

EP 1 291 682 A1

Fig.9

*Fig.10*

EP 1 291 682 A1

Fig.11

EP 1 291 682 A1

*Fig.12*

EP 1 291 682 A1

## Fig.13

EP 1 291 682 A1

## Fig.14

Fig.15

## INTERNATIONAL SEARCH REPORT

| International application No. |
|---|
| PCT/JP01/04171 |

A. CLASSIFICATION OF SUBJECT MATTER
Int.Cl$^7$  G02B5/18, G02B6/16, G02B6/10

According to International Patent Classification (IPC) or to both national classification and IPC

B. FIELDS SEARCHED

Minimum documentation searched (classification system followed by classification symbols)
Int.Cl$^7$  G02B5/18, G02B6/16, G02B6/10

Documentation searched other than minimum documentation to the extent that such documents are included in the fields searched
Jitsuyo Shinan Koho          1926-1996    Toroku Jitsuyo Shinan Koho  1994-2001
Kokai Jitsuyo Shinan Koho    1971-2001    Jitsuyo Shinan Toroku Koho  1996-2001

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | EP 915354 A2 (The Furukawa Electric Co., Ltd.), 12 May, 1999 (12.05.99), Full text; all drawings & JP 11-326672 A Full text; all drawings & JP 11-326673 A Full text; all drawings & JP 11-326674 A Full text; all drawings & JP 11-326656 A Full text; all drawings & JP 11-316313 A Full text; all drawings & JP 11-142651 A Full text; all drawings & CA 2252992 A1 | 1-4 |

☒ Further documents are listed in the continuation of Box C.     ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 14 August, 2001 (14.08.01) | 21 August, 2001 (21.08.01) |

| Name and mailing address of the ISA/ | Authorized officer |
|---|---|
| Japanese Patent Office | |
| Facsimile No. | Telephone No. |

Form PCT/ISA/210 (second sheet) (July 1992)

## INTERNATIONAL SEARCH REPORT

| International application No. |
| --- |
| PCT/JP01/04171 |

C (Continuation).   DOCUMENTS CONSIDERED TO BE RELEVANT

| Category* | Citation of document, with indication, where appropriate, of the relevant passages | Relevant to claim No. |
| --- | --- | --- |
| A | US 5367588 A (Her Majesty in Right of Canada as represented by the Minister of Communications), 22 November, 1994 (22.11.94), Full text; all drawings & JP 7-140311 A Full text; all drawings & GB 2272075 A       & DE 4337103 A1 & FR 2697642 A1       & CA 2087511 A | 1-4 |
| Y | JP 2000-19328 A (Sumitomo Electric Industries, Ltd.), 21 January, 2000 (21.01.00), Full text; all drawings & US 6253008 B1 | 1-4 |
| Y | US 5327515 A (AT&T Laboratories), 05 July, 1994 (05.07.94), Full text; all drawings & JP 6-235808 A Full text; all drawings & EP 606726 A2       & CA 2111808 A & DE 69325640 E | 1-4 |
| A | JP 10-160949 A (Sumitomo Electric Industries, Ltd.), 19 June, 1998 (19.06.98), Full text; all drawings (Family: none) | 1-4 |
| PX | JP 2001-183535 A (Showa Densen Denran K.K.), 06 July, 2001 (06.07.01), Full text; all drawings (Family: none) | 1-4 |
| A | JP 2000-321963 A (Victor Company of Japan, Limited), 24 November, 2000 (24.11.00), Full text; all drawings (Family: none) | 1-4 |

Form PCT/ISA/210 (continuation of second sheet) (July 1992)